(19) Europäisches Patentamt

European Patent Office

Office européen des brevets

(11) **EP 4 283 567 A1**

(12) # EUROPEAN PATENT APPLICATION
published in accordance with Art. 153(4) EPC

(43) Date of publication:
**29.11.2023 Bulletin 2023/48**

(21) Application number: **21922381.5**

(22) Date of filing: **19.10.2021**

(51) International Patent Classification (IPC):
**G06T 17/05** (2011.01)

(52) Cooperative Patent Classification (CPC):
**G01S 17/86; G01S 17/89; G06T 7/73; G06T 17/05**

(86) International application number:
**PCT/CN2021/124676**

(87) International publication number:
**WO 2022/160790 (04.08.2022 Gazette 2022/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **01.02.2021 CN 202110136015**

(71) Applicant: **Huawei Technologies Co., Ltd.
Shenzhen, Guangdong 518129 (CN)**

(72) Inventors:
• **ZHENG, Yue
Shenzhen, Guangdong 518129 (CN)**
• **WANG, Weijie
Shenzhen, Guangdong 518129 (CN)**
• **YANG, Shihua
Shenzhen, Guangdong 518129 (CN)**

(74) Representative: **Huawei European IPR
Huawei Technologies Duesseldorf GmbH
Riesstraße 25
80992 München (DE)**

(54) **THREE-DIMENSIONAL MAP CONSTRUCTION METHOD AND APPARATUS**

(57) This application relates to the field of communication technologies, and discloses a method and apparatus for building a three-dimensional map, to build a more accurate and complete three-dimensional map. The method includes: The apparatus for building a three-dimensional map obtains a current global point cloud map; obtains multiple pieces of image data collected, during movement of a mobile device, by a local collection apparatus disposed on the mobile device; determines real-time pose information of the local collection apparatus that is generated at a corresponding collection moment at which the local collection apparatus collects each of the pieces of image data; and builds a three-dimensional map based on the current global point cloud map, the multiple pieces of image data, and the real-time pose information of the local collection apparatus.

FIG. 3

EP 4 283 567 A1

**Description**

This application claims priority to Chinese Patent Application No. 202110136015.0, filed with the China National Intellectual Property Administration on February 1, 2021, and entitled "METHOD AND APPARATUS FOR BUILDING THREE-DIMENSIONAL MAP", which is incorporated herein by reference in its entirety.

**TECHNICAL FIELD**

Embodiments of this application relate to the field of communication technologies, and in particular, to a method and an apparatus for building a three-dimensional map.

**BACKGROUND**

In the technical fields such as real-time localization and navigation, an important prerequisite is to build a three-dimensional map. For example, mobile robots need to obtain accurate location information to complete intelligent behavior. Therefore, completeness and accuracy of a built three-dimensional map directly affect implementation of localization and navigation functions.

Currently, a three-dimensional map is mainly built by using a simultaneous localization and mapping (simultaneous localization and mapping, SLAM) technology in a conventional technology. SLAM mainly includes visual SLAM and laser SLAM. However, because the visual SLAM is affected by factors such as light intensity and a background texture, low map accuracy may be caused. Although accurate localization information of a detected target can be obtained through laser SLAM, scenario information such as a texture or a color of the detected target cannot be obtained. Consequently, poor visualization is caused to the map.

Therefore, how to build a more accurate and complete three-dimensional map is a technical problem to be studied.

**SUMMARY**

Embodiments of this application provide a method and an apparatus for building a three-dimensional map, to build a more accurate and complete three-dimensional map, thereby improving accuracy of real-time localization and navigation.

Specific technical solutions provided in embodiments of this application are as follows:

According to a first aspect, an embodiment of this application provides a method for building a three-dimensional map. The method includes: An apparatus for building a three-dimensional map obtains a current global point cloud map. The apparatus for building a three-dimensional map obtains multiple pieces of image data collected, during movement of a mobile device, by a local collection apparatus disposed on the mobile device. The apparatus for building a three-dimensional map determines real-time pose information of the local collection apparatus that is generated at a corresponding collection moment at which the local collection apparatus collects each of the pieces of image data. The apparatus for building a three-dimensional map builds a three-dimensional map based on the current global point cloud map, the multiple pieces of image data, and the real-time pose information of the local collection apparatus.

In this method, the current global point cloud map obtained at a depression angle and the local image data collected by the local collection apparatus are complement to each other, so that completeness of the built three-dimensional map can be improved, and robustness during building of the three-dimensional map can be improved. Therefore, in an implementation, in the conventional technology, of performing SLAM based only on collected sensor data, it is possible that a quantity of collected features is small, resulting in a technical problem that a built three-dimensional map is inaccurate. Compared with the implementation, the method provided in this application can improve accuracy of the built three-dimensional map.

In a possible design, the three-dimensional map is built in a designated coordinate system, and the designated coordinate system is any one of the following coordinate systems: a first coordinate system determined based on a pose of the global collection apparatus at an initial moment, a second coordinate system determined based on a pose of the local collection apparatus at the initial moment, a world coordinate system, and a third coordinate system determined based on a pose at any fixed spatial point. That the apparatus for building a three-dimensional map builds a three-dimensional map based on the current global point cloud map, the multiple pieces of image data, and the real-time pose information of the local collection apparatus may be implemented as: determining an original coordinate system in which the current global point cloud map is located, an original coordinate system in which the multiple pieces of image data is located, and an original coordinate system in which the real-time pose information of the local collection apparatus is located; for the original coordinate system different from the designated coordinate system, performing coordinate transformation on map data in the original coordinate system based on a transformation relationship to obtain map data in the designated coordinate system, where the transformation relationship is determined based on a pose relationship between an origin of coordinates of the original coordinate system and an origin of coordinates of the designated coordinate system, and the map data in the original coordinate system includes one or more of the following: the current global point cloud map, the multiple pieces of image data, and the real-time pose information of the local collection apparatus; and building the three-dimensional map based on the current global point cloud map, the multiple pieces of image data, and the real-time pose information of the local collection apparatus that are in the designated coordinate system, to obtain the three-dimensional map in the designated coordinate system.

Based on the design, the apparatus for building a three-dimensional map may build the three-dimensional map in any coordinate system, thereby facilitating real-time localization, navigation, and the like based on the built three-dimensional map. Coordinate transformation may be performed on any spatial point in map data between different coordinate systems based on poses of origins of coordinates of the coordinate systems, so that a transformation relationship between the different coordinate systems can be obtained. Therefore, during implementation of this application, a global point cloud map collected by the global collection apparatus may be combined with the image data collected by the local collection apparatus, so that completeness and accuracy of the built three-dimensional map can be improved.

In a possible design, a relative pose between the global collection apparatus and an AP is fixed, a relative pose between the local collection apparatus and a STA is fixed, and the AP communicates with the STA. For example, if the original coordinate system different from the designated coordinate system is the first coordinate system, the designated coordinate system is the second coordinate system, and the transformation relationship is a first transformation relationship, the apparatus for building a three-dimensional map determines the first transformation relationship in the following manner: determining a first transformation matrix based on the relative pose between the global collection apparatus and the AP, determining a second transformation matrix based on a result of localizing the STA by the AP, and determining a third transformation matrix based on the relative pose between the STA and the local collection apparatus; and obtaining the first transformation relationship based on a product of the first transformation matrix, the second transformation matrix, and the third transformation matrix.

In the design, a transformation relationship between a global collection apparatus coordinate system and an initial local collection apparatus coordinate system may be obtained based on the result of localizing the STA by the AP, so that coordinate transformation can be implemented on the global point cloud map or the local image data, to build a three-dimensional map based on the global point cloud map and the local image data in a same coordinate system, and further a more accurate and complete three-dimensional map can be obtained compared with the conventional technology. Compared with an implementation, in the conventional technology, that a three-dimensional map can be determined only after feature matching is performed by using sensor data in different adjacent time periods and based on a SLAM technology, in this application, a calculation amount can be reduced, and accuracy can be ensured based on the result of localizing the STA by the AP.

In a possible design, that the apparatus for building a three-dimensional map determines real-time pose information of the local collection apparatus that is generated at a corresponding collection moment at which the local collection apparatus collects each of the pieces of image data may be implemented as: obtaining a real-time result of localizing the STA by the AP at each corresponding collection moment at which each of the pieces of image data is collected; obtaining real-time pose information of the STA in a fourth coordinate system at each collection moment based on an initial result of localizing the STA by the AP at the initial moment, initial pose information of the STA in the fourth coordinate system at the initial moment, and the real-time localization result, where an origin of coordinates of the fourth coordinate system is determined based on a pose of the STA at the initial moment; determining real-time pose information of the local collection apparatus in the fourth coordinate system based on the real-time pose information of the STA in the fourth coordinate system and the third transformation matrix; and performing coordinate transformation on the real-time pose information of the local collection apparatus in the fourth coordinate system, to obtain the real-time pose information of the local collection apparatus in the designated coordinate system. In the design, the real-time pose information of the local collection apparatus at each collection moment is obtained through coordinate transformation is performed based on the real-time result of localizing the STA by the AP. Therefore, there is no need to rely on other image data collected in adjacent time periods. This can avoid a disadvantage of a time-cumulative error that may exist in a manner, in the conventional technology, of estimating a real-time pose of a robot by performing feature matching on the image data in the adjacent time periods, so that accuracy of the built three-dimensional map can be improved.

In a possible design, the apparatus for building a three-dimensional map detects, based on the real-time result of localizing the STA by the AP, a loop closure error existing during movement of the mobile device.

In the design, in an implementation of loop closure detection in the conventional technology, a similarity between different image data can be obtained through comparison only by extracting a series of features from sensor data and using a bag-of-words (bag of words) method, so that it can be determined whether a location to which the mobile device currently moves is a pose that has been reached before. Compared with the implementation of loop closure detection, during implementation of this application, loop closure detection is performed based on the result of localizing the STA by the AP, so that efficiency of building the three-dimensional map can be increased, and robustness of loop closure detection in a weak texture environment (for example, on a white wall) can be improved.

In a possible design, before the apparatus for building a three-dimensional map obtains the multiple pieces of image data collected by the local collection apparatus during movement of the mobile device, the apparatus for building a three-dimensional map plans a movement path for the mobile device based on the current global point cloud map; the apparatus for building a three-dimensional map generates a movement instruction based on the real-time pose information of the local collection apparatus and the movement path; and the apparatus for building a three-dimensional map sends the movement instruction to a controller of the mobile device, so that the controller controls the mobile device to move according to the movement instruction.

In the design, the movement path is planned for the mobile device based on the obtained current global point cloud map, and the movement instruction for movement within a movementallowed movement path range is generated for the mobile device based on the real-time pose information of the local collection apparatus, so that blind movement of the mobile device can be avoided. Therefore, efficiency of building the three-dimensional map and accuracy can be improved.

According to a second aspect, an embodiment of this application provides an apparatus for building a three-dimensional map. The apparatus includes a transceiver unit and a processing unit. Functions executed by the transceiver unit and the processing unit may correspond to the steps performed by the apparatus for building a three-dimensional map in any one of the possible designs or implementations of the first aspect.

According to a third aspect, an embodiment of this application further provides a computing device. The computing device includes one or more processors and a memory. The memory is coupled to the processor. The memory stores computer program code, and the computer program code includes computer instructions. The processor executes the computer instructions in the memory, to perform the method provided in any one of the possible designs of the first aspect. Optionally, the computing device may further include a display screen. The display screen is triggered by the processor to display information to users, such as a global point cloud map collected by a global collection apparatus, or image data collected by a local collection apparatus. Optionally, the computing device further includes a communication interface, and the processor is coupled to the communication interface. The communication interface may be a transceiver or an input/output interface. When the computing device is a chip included in a network device, the communication interface may be an input/output interface of the chip. Optionally, the transceiver may be a transceiver circuit, and the input/output interface may be an input/output circuit.

According to a fourth aspect, an embodiment of this application further provides a computing device cluster, including at least one computing device provided in the third aspect.

According to a fifth aspect, an embodiment of this application further provides a computer storage medium. The computer storage medium stores a computer program, and when the computer program is executed by a computer, the method provided in any one of the possible designs of the first aspect is performed.

According to a sixth aspect, an embodiment of this application further provides a computer program product. The computer program product includes computer program code. When the computer program code is executed by a processor of a communication apparatus, the communication apparatus is enabled to perform the method in any one of the possible designs of the first aspect.

According to a seventh aspect, an embodiment of this application further provides a chip. The chip is configured to read and execute a software program stored in a memory, to perform the method in any one of the possible designs of the first aspect. The memory may be connected to the chip, or the memory may be built in the chip.

For advantageous effects of any one of the second aspect to the seventh aspect, specifically refer to the advantageous effects of the various possible designs of the first aspect. Details are not repeatedly described herein.

**BRIEF DESCRIPTION OF DRAWINGS**

FIG. 1 is a schematic flowchart of a SLAM system;
FIG. 2 is a diagram of an application scenario of a method for building a three-dimensional map according to an embodiment of this application;
FIG. 3 is a schematic diagram of interaction of a method for building a three-dimensional map according to an embodiment of this application;
FIG. 4 is a schematic flowchart of a method for building a three-dimensional map according to an embodiment of this application;
FIG. 5 is a schematic diagram of a structure of an apparatus for building a three-dimensional map according to an embodiment of this application;
FIG. 6 is a schematic diagram of a structure of another apparatus for building a three-dimensional map according to an embodiment of this application; and

FIG. 7 is a schematic diagram of a structure of a chip according to an embodiment of this application.

## DESCRIPTION OF EMBODIMENTS

The following describes in detail embodiments of this application with reference to the accompanying drawings.

Embodiments of this application may be applied to scenarios such as real-time localization and navigation of a mobile device during autonomous movement. The mobile device is, for example, a sweeping robot, a food delivery robot, a distribution robot, a mobile trolley, or a logistics trolley. A specific type of the applicable mobile device is not limited in this application.

To enable accurate intelligent walking behavior of the mobile device, a complete and accurate three-dimensional map usually needs to be built. Currently, a three-dimensional map is mainly built by using a SLAM technology in the conventional technology. However, when the three-dimensional map is built by using the SLAM technology, a problem such as low accuracy caused by a time-cumulative error or an incomplete three-dimensional map caused by blind spots may exist.

In view of this, an embodiment of this application provides a method for building a three-dimensional map. A three-dimensional map is built by combining a global point cloud map, multiple pieces of local image data, and real-time pose information of a local collection apparatus, so that the global point cloud map and the local image data are complement to each other, to build a more accurate and complete three-dimensional map.

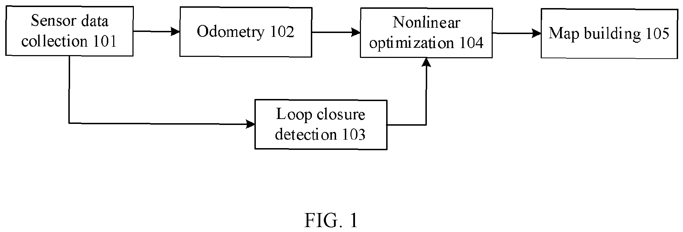

First, a system architecture to which embodiments of this application may be applied is described. FIG. 1 is a schematic flowchart of a SLAM system. The SLAM technology may be understood as follows: A mobile robot starts to move from an unknown location in an unknown environment, and locate itself during movement through location estimation and according to a map, and builds an incremental map by localizing itself, to implement autonomous localization and navigation of the mobile robot. The SLAM system mainly includes several functions: sensor data collection 101, odometry 102, loop closure detection 103, nonlinear optimization 104, and map building 105. The functions are mainly implemented as follows:

The sensor data collection 101 is performed to collect sensor data required in a map building process. The sensor data includes, but is not limited to, image data, laser point cloud information, inertial sensor data, and the like. For example, in visual SLAM, the sensor data may be image data collected by using a visual sensor, such as a camera or a camera lens; and in laser SLAM, the sensor data may be a laser point cloud obtained by using a laser radar, an image obtained based on a laser point cloud, or the like.

The odometry 102 is performed to estimate a pose change of a robot, to build a local three-dimensional map. The pose change includes translation information and rotation information. In the conventional technology, matching and comparison are mainly performed on sensor data in adjacent time periods through the laser SLAM and the visual SLAM, so that a pose of the robot can be estimated. However, in an odometry calculation process, because the pose of the robot is estimated based on a pose change of the robot in adjacent time periods, a large time-cumulative error may exist. Consequently, accuracy of a built three-dimensional map is reduced.

The loop closure detection 103 is performed to determine whether a current location of the robot is a location that has been reached before. If it is determined that loop closure exists, loop closure information is used for nonlinear optimization 104 to correct a drift of the odometry.

Nonlinear optimization 104 is performed to mainly optimize the pose of the robot and a map based on poses of the robot that are obtained through the odometry 102 in different time periods and the loop closure information of the loop closure detection 103, to obtain movement trajectories globally consistent.

Map building 105 is performed to build a complete and global three-dimensional map based on the movement trajectories of the robot and multiple local three-dimensional maps built through the odometry 102. The global three-dimensional map built includes, but is not limited to, a sparse map, a dense map, a semantic map, and the like. This is not limited in this application.

Based on the content described in the background and the content described above, a manner of building a map through the visual SLAM is greatly affected by image feature matching accuracy; and with unsatisfactory light and a weak background texture, a few features are extracted from the sensor data. Therefore, a problem such as inaccurate pose tracking or no map matching may be caused. A manner of building a map through the laser SLAM has a disadvantage of poor visualization. In addition, if a height of the robot is limited, an incomplete map is built because information about a blocked object in a high place cannot be obtained. In addition, a large time-cumulative error may exist when the pose of the robot is estimated by using the SLAM technology in the conventional technology. Therefore, an embodiment of this application provides a method for building a three-dimensional map.

Embodiments of this application may be applied to a scenario of building a three-dimensional map. Specifically, in the scenario of building a three-dimensional map, a three-dimensional map may be built for the first time or may be rebuilt; and an indoor three-dimensional map may be built, or an outdoor three-dimensional map may be built. Building the indoor three-dimensional map may be, for example, building an indoor three-dimensional map by a sweeping robot, or building a three-dimensional map of a warehouse by a mobile trolley. Building the outdoor three-dimensional map may be, for example, building a three-dimensional map of a park by a logistics trolley in the park. This is not limited in this application.

It can be noted that "multiple" used in this application refers to two or more. The term "and/or" describes an association relationship for describing associated objects and represents that three relationships may exist. For example, A and/or B may represent the following three cases: Only A exists, both A and B exist, and only B exists. The character "/" usually indicates an "or" relationship between associated objects. In addition, it can be understood that although terms such as "first" and "second" may be used to describe data in embodiments of this application, the data should not be limited to the terms. The terms are merely used to distinguish data from one another.

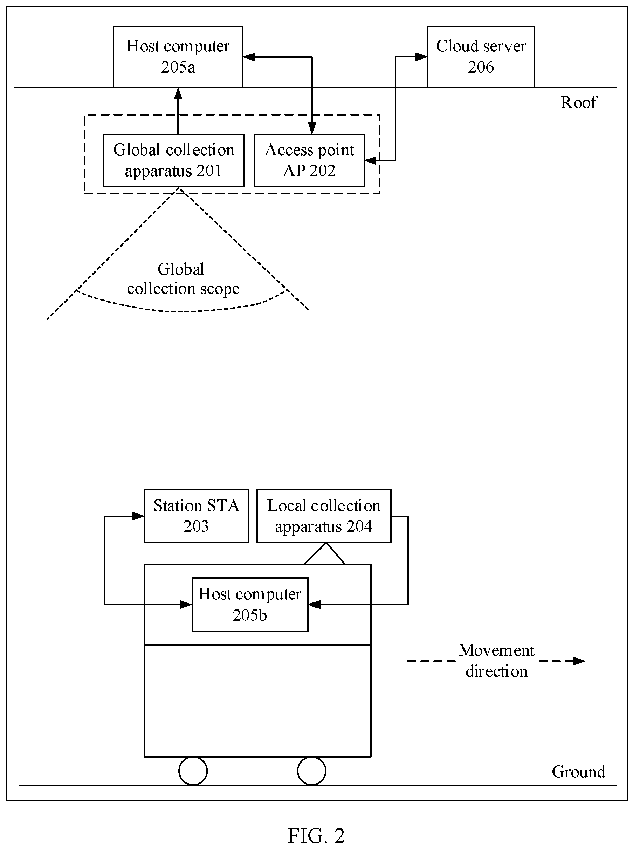

FIG. 2 is a diagram of an application scenario of a method for building a three-dimensional map according to an embodiment of this application. The application scenario may include a global collection apparatus 201, an access point (access point, AP) 202, a station (station, STA) 203, and a local collection apparatus 204.

If this application is applied to a scenario of building an indoor three-dimensional map, the global collection apparatus 201 may be disposed in a high place, for example, on a roof, and is configured to collect a global point cloud map in the target scenario. Alternatively, if this application is applied to a scenario of building an outdoor three-dimensional map, the global collection apparatus 201 may be disposed in a high place, for example, on a wall or on a utility pole. A manner of disposing the global collection apparatus 201 is not limited in this application. The global collection apparatus 201 may be a depth sensor, and the depth sensor includes, but is not limited to, a laser radar based on a ranging laser, a depth camera lens, a depth camera, and the like.

The AP 202 is configured to locate the station STA 203 to obtain a localization result of the STA, so that real-time pose information of the STA can be determined. The AP 202 may receive access of one or more STAs 203 based on an optical communication technology, by using a wireless technology, or the like. The optical communication technology for communication between the AP 202 and the STA 203 includes, but is not limited to, light fidelity (light fidelity, Li-Fi), visible light communication (visible light communication, VLC), free-space optical communication (free-space optical communication, FSO), and the like. It can be noted that the AP 202 and the global collection apparatus 201 may be two separate devices, for example, an AP device and a depth sensor. Alternatively, both the AP 202 and the global collection apparatus 201 may be included in an integrated device. For example, there is an integrated device that includes both a unit capable of implementing functions of the global collection apparatus 201 and a unit capable of implementing functions of the AP 202. Alternatively, the global collection apparatus 201 may be integrated in the AP 202. This is not limited in this application.

The local collection apparatus 204 may be disposed on a mobile device, or integrated in a mobile device. The local collection apparatus 204 is configured to collect multiple pieces of different image data during movement of the mobile device. The local collection apparatus 204 may be a monocular camera lens, a binocular camera lens, a red-green-blue-depth (RGBD) camera lens, or the like. This is not limited in this application. Similar to a relative pose relationship between the global collection apparatus 201 and the AP 202, a relative pose relationship between the local collection apparatus 204 and the STA 203 is also not limited during implementation of this application.

In addition, the application scenario further includes a host computer 205 (which may include 205a or 205b in FIG. 2) and a cloud server 206. The host computer 205a is configured to: obtain data of the global collection apparatus 201 and data of the AP 202, and process and calculate the received data, to display a global point cloud map, deliver a control instruction, and the like. For example, the host computer 205a performs coordinate transformation on the global point cloud map collected by the global collection apparatus 201, and plans a movement path for the mobile device based on the global point cloud map. Similarly, the host computer 205b is configured to: obtain data of the local collection apparatus 204 and data of the STA 203, and process and calculate the received data, to display local image data, deliver a control instruction, and the like. For example, the host computer 205b may be disposed in the mobile device, and may serve as a controller of the mobile device to control autonomous movement of the mobile device. It can be noted that division into modules in embodiments of this application is schematic, and is merely logical function division. During actual implementation, there may be another division manner. In addition, functional units in each embodiment of this application may be integrated in one processing unit, or may exist separately and physically, or two or more units may be integrated in one unit. For example, the host computer 205b may be integrated in the mobile device, or may exist separately and physically. The integrated unit may be implemented in a form of hardware, or may be implemented in a form of a software function unit.

The method provided in this embodiment of this application may be implemented by using the host computer 205a connected to the global collection apparatus 201, may be implemented by using the host computer 205b connected to the local collection apparatus 204, may be implemented by using the cloud server 206, or may even be implemented through coordination and division of labor between the host computer and the cloud server. That is, one or a combination of the host computer 205a, the host computer 205b, or the cloud server may serve as an apparatus, for building a three-dimensional map, for implementing the method provided in this application. During implementation, how to implement the method may be determined depending on a compute capability of each device and/or an actual scenario. For example, if a compute capability of the host computer 205a can support implementation of the method provided in this application, the method provided in this application may be implemented by using the host computer 205a. This is not limited in this application.

It can be noted that types and quantities of devices included in the application scenario may be different based on a specific actual requirement. For example, there may be multiple global collection apparatuses 201 disposed on a roof, and each of the global collection apparatuses 201 is responsible for collecting a global point cloud map in one area. Alternatively, there may be multiple APs 202 disposed on a roof.

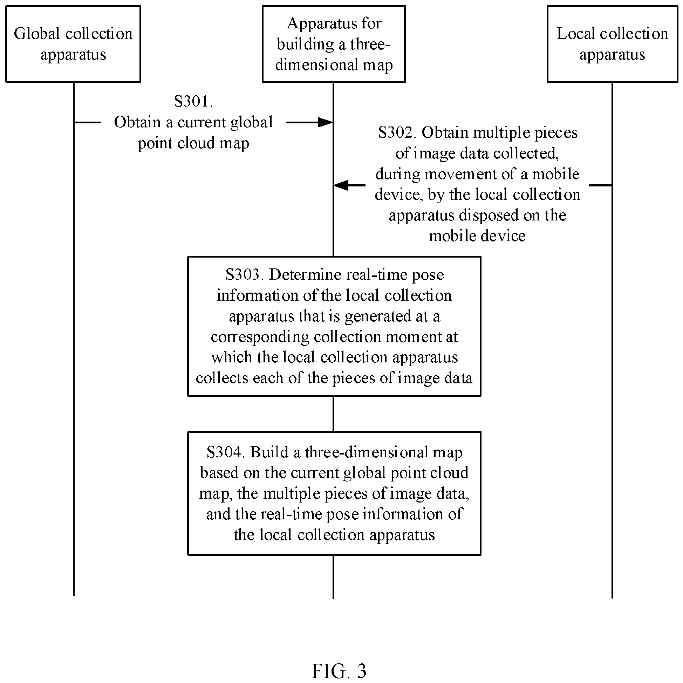

Based on the scenario shown in FIG. 2, FIG. 3 is a schematic diagram of interaction of a method for building a three-dimensional map according to an embodiment of this application. The interaction procedure includes the following steps.

S301. An apparatus for building a three-dimensional map obtains a current global point cloud map.

For example, a global point cloud map may be obtained by using the global collection apparatus 201. During implementation, the global point cloud map includes a large viewing angle range in a target scenario in which a three-dimensional map needs to be built. For example, if a three-dimensional map in a room needs to be built to facilitate intelligent movement behavior of a sweeping robot, a global point cloud map may be obtained from a camera lens in the room. In addition, because a location of an object in the target scenario may frequently change, the current global point cloud map may be obtained in real time or periodically, so that a change in the target scenario can be known in time, and an accurate three-dimensional map that can better reflect a current situation can be built.

It can be noted that composition of the apparatus for building a three-dimensional map may be determined based on a situation in an actual scenario, and may include one or a combination of the host computer 205a, the host computer 205b, or the cloud server 206 in FIG. 2 during implementation. This is not limited in this application.

In a possible implementation, the global point cloud map may be applied to planning of a movement path of a mobile device. For example, an area of a walkable road surface in the target scenario is determined by extracting a feature from the global point cloud map, so that a movement path can be planned for the mobile device in the area of the walkable road surface. In addition, the apparatus for building a three-dimensional map may further determine a real-time pose of a local collection apparatus, so that an orientation of the local collection apparatus, that is, a movement direction of the mobile device, can be determined. Then, the apparatus for building a three-dimensional map may generate a movement instruction based on the movement direction of the mobile device in the determined area of the walkable road surface. The apparatus for building a three-dimensional map may send the movement instruction to a controller of the mobile device. The mobile device may be, for example, a trolley in FIG. 2, and the controller may be, for example, the host computer 205b on the trolley in FIG. 2. Therefore, the host computer 205b controls the mobile device to move according to the movement instruction. Based on the design, a movement path may be planned for the mobile device based on the obtained global point cloud map, so that blind movement of the mobile device can be avoided. Therefore, efficiency of building the three-dimensional map and accuracy can be improved.

S302. The apparatus for building a three-dimensional map obtains multiple pieces of image data collected, during movement of the mobile device, by a local collection apparatus disposed on the mobile device.

For example, because the local collection apparatus may be disposed on the mobile device, the local collection apparatus may move with movement of the mobile device, so that the local collection apparatus can collect multiple pieces of different image data during movement of the mobile device. During specific implementation, the local collection apparatus may periodically collect the image data, for example, collect one piece of image data every 10s. Alternatively, the local collection apparatus may collect one piece of image data after the mobile device moves a specified distance each time. This is not limited in this application.

S303. The apparatus for building a three-dimensional map determines real-time pose information of the local collection apparatus that is generated at a corresponding collection moment at which the local collection apparatus collects each of the pieces of image data.

In a SLAM system in the conventional technology, feature matching is performed, through the odometry 102, on adjacent image data collected by the local collection apparatus, to estimate a pose change of the local collection apparatus. However, a disadvantage of a large time-cumulative error may exist.

To build a more accurate three-dimensional map, an AP may obtain localization information of a STA in real time. During implementation of this application, a relative pose between the AP and the global collection apparatus is set to be fixed, and a relative pose between the STA and the local collection apparatus is set to be fixed. Therefore, real-time pose information of the STA may be determined based on a real-time result of localizing the STA by the AP. Next, because the relative pose between the STA and the local collection apparatus is fixed, the real-time pose information of the local collection apparatus may be further determined based on the real-time pose information of the STA. It can be noted that in a common scenario, poses of the global collection apparatus at different moments and poses of the AP at different moments are set to be fixed. However, because the local collection apparatus and the STA are disposed on the mobile device, pose information of the local collection apparatus and the AP is changing.

S304. The apparatus for building a three-dimensional map builds a three-dimensional map based on the current global point cloud map, the multiple pieces of image data, and the multiple pieces of determined real-time pose information.

For example, the three-dimensional map may be built in a designated coordinate system based on an actual scenario requirement. The designated coordinate system may be any one of the following coordinate systems: a first coordinate system (which may also be referred to as a global collection apparatus coordinate system) determined based on a pose of the global collection apparatus at an initial moment, a second coordinate system (which may also be referred to as an initial local collection apparatus coordinate system) determined based on a pose of the local collection apparatus at the initial moment, a world coordinate system, and a third coordinate system (for example, an AP coordinate system determined based on the pose of the AP described above) determined based on a pose of any fixed spatial point. A pose includes a location and a posture, that is, three-dimensional coordinates and an orientation. The initial moment may be expressed as any moment when the mobile device is in a static state in the target scenario, or may be any moment selected from a movement process of the mobile device by the apparatus for building a three-dimensional map. Selecting the initial moment is not limited in this application, and is mainly to select a relative pose apparatus between the global collection apparatus and the local collection apparatus at a same moment as a basic transformation relationship.

During implementation of building a three-dimensional map, the current global point cloud map, the multiple pieces of image data, and the multiple pieces of determined real-time pose information that are obtained by the apparatus for building a three-dimensional map may be located in different coordinate systems. To build the three-dimensional map in an integrated manner, the information is transformed to a same coordinate system, and steps are as follows.

Step A1: The apparatus for building a three-dimensional map determines an original coordinate system in which the following information is located: the current global point cloud map, the multiple pieces of image data, and the real-time pose information of the local collection apparatus.

For example, the global point cloud map collected by the global collection apparatus 201 is located in the global collection apparatus coordinate system. The image data collected by the local collection apparatus 204 is located in a real-time local collection apparatus coordinate system determined based on the real-time pose of the local collection apparatus. The real-time pose information of the local collection apparatus may be determined based on the real-time pose information of the STA. Therefore, the real-time pose information of the local collection apparatus is located in a real-time STA coordinate system determined based on a real-time pose of the STA.

Step A2: For the original coordinate system different from the designated coordinate system, perform coordinate transformation on map data in the original coordinate system based on a transformation relationship to obtain map data in the designated coordinate system.

The transformation relationship is determined based on a pose relationship between an origin of coordinates of the original coordinate system and an origin of coordinates of the designated coordinate system, and the map data in the original coordinate system includes one or more of the following: the current global point cloud map, the multiple pieces of image data, and the real-time pose information of the local collection apparatus. For example, if the designated coordinate system is the initial local collection apparatus coordinate system, and the original coordinate system in which the global point cloud map is located is the global collection apparatus coordinate system, a first transformation relationship from the global collection apparatus coordinate system to the initial local collection apparatus coordinate system is obtained. After coordinate transformation is performed on the global point cloud map in the global collection apparatus coordinate system based on the first transformation relationship, a global point cloud map in the initial local collection apparatus coordinate system is obtained.

For example, if the designated coordinate system is the initial local collection apparatus coordinate system, the first transformation relationship for transforming the global point cloud map from the global collection apparatus coordinate system to the initial local collection apparatus coordinate system may be obtained based on the following described content.

It is assumed that homogeneous coordinates, in the global collection apparatus coordinate system, of any point existing in space may be represented as $[X_L, Y_L, Z_L, 1]^T$, and homogeneous coordinates of the point in the initial local collection apparatus coordinate system is represented as $[X_c, Y_c, Z_c, 1]^T$. A coordinate transformation relationship of the point between the global collection apparatus coordinate system and the initial local collection apparatus coordinate system may be represented by using the following Formula 1:

$$[X_C, Y_C, Z_C, 1]^T = \begin{bmatrix} R_{3*3} & T_{3*1} \\ 0_{1*3} & 1_{1*1} \end{bmatrix}_{\text{global}\rightarrow\text{local}} [X_L, Y_L, Z_L, 1]^T \qquad \text{Formula 1.}$$

$\begin{bmatrix} R_{3*3} & T_{3*1} \\ 0_{1*3} & 1_{1*1} \end{bmatrix}$ indicates a transformation matrix from the global collection apparatus coordinate system to the initial local collection apparatus coordinate system, and the matrix $R_{3*3}$ is a rotation matrix indicating orientation angle transformation between the global collection apparatus coordinate system and the initial local collection apparatus coordinate system; and the matrix $T_{3*1}$ is a translation vector indicating three-dimensional coordinate transformation between the global collection apparatus coordinate system and the initial local collection apparatus coordinate system.

It can be noted that transformation of a spatial point from the initial local collection apparatus coordinate system to the global collection apparatus coordinate system may be represented by using the following Formula 2:

$$[X_L, Y_L, Z_L, 1]^T = \begin{bmatrix} R_{3*3}' & T_{3*1}' \\ 0_{1*3} & 1_{1*1} \end{bmatrix}_{\text{local}\rightarrow\text{global}} [X_C, Y_C, Z_C, 1]^T \qquad \text{Formula 2.}$$

The matrix $R_{3*3}'$ is an inverse matrix of the matrix $R_{3*3}$ in Formula 1, the matrix $T_{3*1}'$ is an opposite number of a product of the inverse matrix of the matrix $R_{3*3}$ and translation vector $T_{3*1}$ in Formula 1. For a specific representation manner, refer to the following Formula 3; and it can be understood that the foregoing Formula 2 is an inverse process of Formula 1.

According to the foregoing Formula 1 and Formula 2, the first transformation relationship for transforming any spatial point from the global collection apparatus coordinate system to the initial local collection apparatus coordinate system, and a second transformation relationship for transforming any spatial point from the initial local collection apparatus coordinate system to the global collection apparatus coordinate system may be obtained, so that coordinate transformation between different coordinate systems can be conveniently implemented.

In a possible implementation, a coordinate transformation relationship from the global collection apparatus coordinate system to the initial local collection apparatus coordinate system may be determined based on an initial result of localizing the STA by the AP at the initial moment, and may be determined during implementation based on three transformation matrices as follows: A first transformation matrix is determined based on the relative pose between the global collection apparatus and the AP. The relative pose between the global collection apparatus and the AP is fixed, so that the first transformation matrix may be obtained as a fixed matrix. It can be noted that regardless of a specific manner in which the global collection apparatus and the AP are implemented, for example, the independent manner, the manner of being included in an integrated device, and the manner of the global collection apparatus being included in the AP that are described above, an origin of coordinates of the global collection apparatus is different from an origin of coordinates of a light-emitting apparatus (that is, a module for optical communication) included in the AP. Therefore, to obtain a more accurate transformation relationship, the relative pose between the global collection apparatus and the AP is reflected based on the origin of coordinates of the global collection apparatus and the origin of coordinates of the light-emitting apparatus of the AP.

$$\begin{bmatrix} R_{3*3} & T_{3*1} \\ 0_{1*3} & 1_{1*1} \end{bmatrix}_{\text{global}\rightarrow\text{AP}}$$

For example, the first transformation matrix may be represented by using a matrix .

A second transformation matrix is determined based on a relative pose between the AP and the STA, and may be represented by using a matrix $\begin{bmatrix} R_{3*3} & T_{3*1} \\ 0_{1*3} & 1_{1*1} \end{bmatrix}_{AP\rightarrow STA}$ .

The STA is disposed on the mobile device. Therefore, the relative pose between the AP and the STA changes in real time during movement of the mobile device, and the second transformation matrix is not a fixed matrix. During specific implementation, the apparatus for building a three-dimensional map may determine the relative pose between the AP and the STA based on a result of localizing the STA by the AP, to determine the second transformation matrix.

For example, the result of localizing the STA by the AP may be represented by using a matrix $\begin{bmatrix} R_{3*3} & T_{3*1} \\ 0_{1*3} & 1_{1*1} \end{bmatrix}_i$ , and determining the second transformation matrix based on the result of localizing the STA by the AP may be represented by using the following Formula 3:

$$\begin{bmatrix} R_{3*3} & T_{3*1} \\ 0_{1*3} & 1_{1*1} \end{bmatrix}_{AP\rightarrow STA} = \begin{bmatrix} R_{3*3\,\text{localization}}^{-1} & -R_{3*3\,\text{localization}}^{-1}T_{3*1\,\text{localization}} \\ 0_{1*3} & 1_{1*1} \end{bmatrix} \text{Formula 3.}$$

A third transformation matrix is determined based on the relative pose between the STA and the local collection apparatus. The relative pose between the STA and the local collection apparatus is fixed, so that the third transformation matrix may also be obtained as a fixed matrix.

For example, the third transformation matrix has a same obtaining principle as the first transformation matrix, and may be represented by using a matrix $\begin{bmatrix} R_{3*3} & T_{3*1} \\ 0_{1*3} & 1_{1*1} \end{bmatrix}_{STA \to local}$.

Therefore, based on a product of the first transformation matrix, the second transformation matrix, and the third transformation matrix, a transformation relationship between the global collection apparatus and the local collection apparatus may be obtained. For example, the transformation relationship may be determined by using the following Formula 4:

$$\begin{bmatrix} R_{3*3} & T_{3*1} \\ 0_{1*3} & 1_{1*1} \end{bmatrix}_{global \to local} = \begin{bmatrix} R_{3*3} & T_{3*1} \\ 0_{1*3} & 1_{1*1} \end{bmatrix}_{global \to AP} \begin{bmatrix} R_{3*3} & T_{3*1} \\ 0_{1*3} & 1_{1*1} \end{bmatrix}_{AP \to STA} \begin{bmatrix} R_{3*3} & T_{3*1} \\ 0_{1*3} & 1_{1*1} \end{bmatrix}_{STA \to local} \qquad \text{Formula 4.}$$

In another possible implementation, during implementation of this application, the apparatus for building a three-dimensional map may further determine the transformation relationship in a calibration object assisted manner. For example, a calibration object such as a checkerboard or a target may be placed in a target scenario. At any moment during movement of the mobile device, a collection area of the global collection apparatus and a collection area of the local collection apparatus include a common field of view. This may also be understood as that both the global collection apparatus and the local collection apparatus can collect information about the calibration object. In the scenario, based on an algorithm of feature extraction and matching in the field of computer vision technologies, a coordinate set $\{[X_c^i, Y_c^i, Z_c^i | i \in \text{calibration object}]\}_t$ of the calibration object at any moment t in the local collection apparatus coordinate system and a coordinate set $\{[X_L^i, Y_L^i, Z_L^i | i \in \text{calibration object}]\}_t$ of the calibration object at the moment t in the global collection apparatus coordinate system are determined; a transformation relationship for transforming the global point cloud map from the global collection apparatus coordinate system to the local collection apparatus coordinate system is calculated by using a registration algorithm such as iterative closest point (iterative closest point, ICP) or perspective-n-point (perspective-n-point, PnP); and coordinate transformation is performed on the global point cloud map based on the transformation relationship, to obtain a global point cloud map in the local collection apparatus coordinate system.

The following describes how to determine real-time pose information of the local collection apparatus in the designated coordinate system based on the real-time result of localizing the STA by the AP.

For example, a fourth coordinate system (which may also be referred to as an initial STA coordinate system) is established based on an initial pose of the STA at the initial moment. In this case, the STA is at an origin of coordinates of the initial STA coordinate system, and initial pose information of the STA may be represented as $\begin{bmatrix} I_{3*3} & 0_{3*1} \\ 0_{1*3} & 1_{1*1} \end{bmatrix}$, where a matrix $I_{3*3}$ is represented as a matrix whose coordinate system has an orientation consistent with that of the STA. According to the content described above, the third transformation matrix from the STA to the local collection apparatus may be obtained as $\begin{bmatrix} R_{3*3} & T_{3*1} \\ 0_{1*3} & 1_{1*1} \end{bmatrix}_{STA \to local}$. In this case, an initial pose of the local collection apparatus in the initial STA coordinate system may be represented as $\begin{bmatrix} R_{3*3}^{-1} & -R_{3*3}^{-1} T_{3*1} \\ 0_{1*3} & 1_{1*1} \end{bmatrix}_{STA \to local}$. In addition, the apparatus for building a three-dimensional map may further determine that a pose of the STA in an AP coordinate system (that is, a coordinate system established by using a pose of the AP at the initial moment as an origin of coordinates) is the initial result of localizing the STA by the AP, and it is assumed that the initial result is represented by using $\begin{bmatrix} R_{3*3(t0)} & T_{3*1(t0)} \\ 0_{1*3} & 1_{1*1} \end{bmatrix}_{localization}$.

During movement, any moment t1 is used as an example. The apparatus for building a three-dimensional map may determine real-time pose information of the local collection apparatus in the initial local collection apparatus coordinate system in the following steps.

Step B1. The apparatus for building a three-dimensional map determines a real-time result of localizing the STA by the AP at the moment t1, and it is assumed that the real-time result is represented by using

$$\begin{bmatrix} R_{3*3(t1)} & T_{3*1(t1)} \\ 0_{1*3} & 1_{1*1} \end{bmatrix}_{localization}.$$

Step B2. The apparatus for building a three-dimensional map performs coordinate transformation on the STA in the AP coordinate system, to obtain real-time pose information of the STA in the initial STA coordinate system, and it is assumed that the real-time pose information is represented by using

$$\begin{bmatrix} R_{3*3(t0)}{}^{-1}R_{3*3(t1)} & R_{3*3(t0)}{}^{-1}(T_{3*1(t1)} - T_{3*1(t0)}) \\ 0_{1*3} & 1_{1*1} \end{bmatrix}_{localization}.$$

Step B3. The apparatus for building a three-dimensional map determines real-time pose information of the local collection apparatus in the initial STA coordinate system based on the real-time pose information of the STA in the initial STA coordinate system and the third transformation matrix.

For example, because the third transformation matrix is a fixed matrix, a relative pose of the local collection apparatus to the STA at the moment t1 may be determined based on an initial pose of the local collection apparatus in the initial STA coordinate system at the initial moment. In this case, at the moment t1, a real-time pose of the local collection apparatus in the initial STA coordinate system is updated to

$$\begin{bmatrix} R_{3*3(t0)}{}^{-1}R_{3*3(t1)} & R_{3*3(t0)}{}^{-1}(T_{3*1(t1)} - T_{3*1(t0)}) \\ 0_{1*3} & 1_{1*1} \end{bmatrix}_{localization} \begin{bmatrix} R_{3*3}{}^{-1} & -R_{3*3}{}^{-1}T_{3*1} \\ 0_{1*3} & 1_{1*1} \end{bmatrix}_{STA \to local}$$

Step B4. Perform coordinate transformation on the real-time pose information of the local collection apparatus in the initial STA coordinate system, to obtain the real-time pose information of the local collection apparatus in the initial local collection apparatus coordinate system. The real-time pose information of the local collection apparatus in the initial local collection apparatus coordinate system may be determined based on a product of the third transformation matrix and the real-time pose information of the local collection apparatus in the initial STA coordinate system, and the process may be represented as the following example:

$$\begin{bmatrix} R_{3*3} & T_{3*1} \\ 0_{1*3} & 1_{1*1} \end{bmatrix}_{STA \to local} \begin{bmatrix} R_{3*3(t0)}{}^{-1}R_{3*3(t1)} & R_{3*3(t0)}{}^{-1}(T_{3*1(t1)} - T_{3*1(t0)}) \\ 0_{1*3} & 1_{1*1} \end{bmatrix}_{localization}$$

$$\begin{bmatrix} R_{3*3}{}^{-1} & -R_{3*3}{}^{-1}T_{3*1} \\ 0_{1*3} & 1_{1*1} \end{bmatrix}_{STA \to local}$$

In another possible example, if the transformation relationship is obtained in the calibration object assisted manner, the real-time pose information of the local collection apparatus may be determined based on the result of localizing the STA by the AP, the obtained transformation relationship, the first transformation matrix between the global collection apparatus and the AP, and the second transformation matrix between the STA and the local collection apparatus.

Based on the foregoing examples, the real-time pose information of the local collection apparatus at each collection moment is obtained through coordinate transformation is performed based on the real-time result of localizing the STA by the AP. Therefore, there is no need to rely on other image data collected in adjacent time periods. This can avoid a disadvantage of a time-cumulative error that may exist in the conventional technology.

Step A3: The apparatus for building a three-dimensional map builds a three-dimensional map based on the current global point cloud map, the multiple pieces of image data, and the real-time pose information of the local collection apparatus that are in the designated coordinate system, to obtain the three-dimensional map in the designated coordinate system.

In addition, during implementation of this application, when implementing loop closure detection, the apparatus for building a three-dimensional map may directly determine, based on the result of localizing the STA by the AP, whether a loop closure error exists during movement of the mobile device. During specific implementation, the apparatus for building a three-dimensional map may further detect a loop closure error by performing feature matching on the image data. Based on the design, in an implementation of loop closure detection in the conventional technology, a similarity between different image data can be obtained through comparison only by extracting a series of features from sensor data and using a bag-of-words (bag of words) method, so that it can be determined whether a location to which the mobile device currently moves is a pose that has been reached before. Compared with the implementation of loop closure detection, during implementation of this application, the apparatus for building a three-dimensional map performs loop closure detection based on the result of localizing the STA by the AP, so that efficiency of building the three-dimensional map can be increased.

It can be noted that before the apparatus for building a three-dimensional map builds the three-dimensional map by using the method provided in this embodiment of this application, because processing needs to be performed by the STA and the AP in this embodiment of this application, whether the STA disposed on the mobile device is online needs to be determined. If the STA is offline, conventional SLAM may be performed by directly using the image data collected by the local collection apparatus. For example, if the local collection apparatus is an RGBD camera, visual SLAM may be performed based on image data collected by the RGBD camera.

For example, on the basis that the apparatus for building a three-dimensional map can obtain the global point cloud map, the three-dimensional map may be built through map building 105 after the obtained real-time pose information of the local collection apparatus and the loop closure error are optimized through nonlinear optimization 104. For processing of the function of the nonlinear optimization 104 in this embodiment of this application, refer to an optimization manner in the SLAM system. This is not repeatedly described in detail in this application.

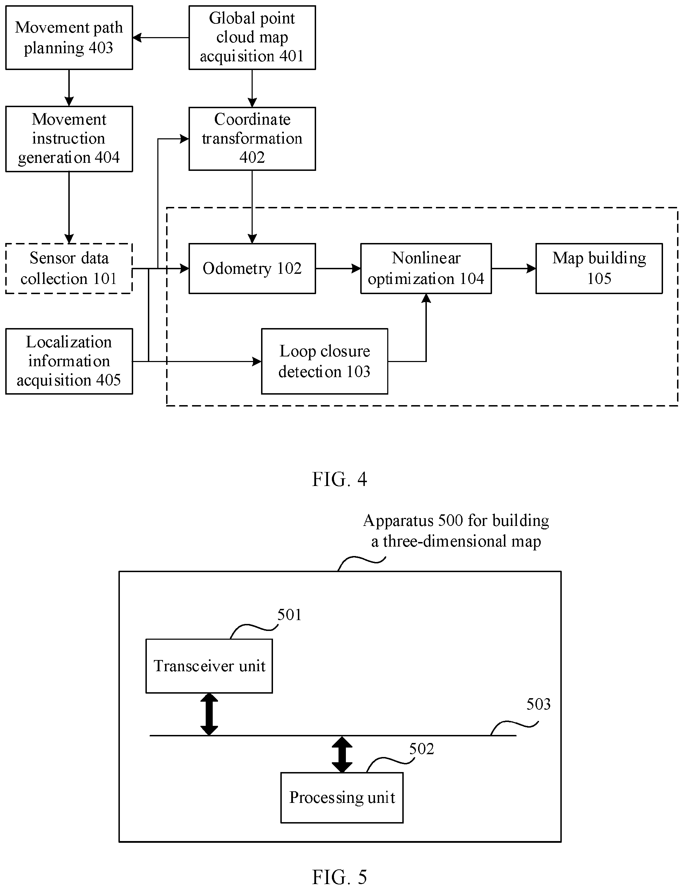

To more clearly understand the method provided in this embodiment of this application, FIG. 4 is a schematic flowchart of a method for building a three-dimensional map according to an embodiment of this application. Compared with a SLAM system in the conventional technology, to implement the method provided in this application, several functions, namely, global point cloud map acquisition 401, coordinate transformation 402, movement path planning 403, movement instruction generation 404, and localization information acquisition 405 are further included. The functions newly added in this application are mainly implemented as follows:
The global point cloud map acquisition 401 indicates that a global collection apparatus obtains a current global point cloud map.

The coordinate transformation 402 indicates that coordinate transformation is performed on map data that is in the current global point cloud map, multiple pieces of image data, and real-time pose information of a local collection apparatus and that does not belong to a designated coordinate system, to obtain map data in the designated coordinate system. In this embodiment of this application, an example in which a global point cloud map is transformed from a global collection apparatus coordinate system to an initial local collection apparatus coordinate system is used for description. If an implementation of transforming local image data from the local collection apparatus coordinate system to the global collection apparatus coordinate system is used during implementation, the coordinate transformation 402 may perform coordinate transformation based on local image data obtained through sensor data collection 101.

The movement path planning 403 indicates that a movement path may be planned for a mobile device based on the global point cloud map, to avoid blind movement of the mobile device. The movement instruction generation 404 is used to indicate that a movement instruction is generated for the mobile device based on the movement path and a pose of the local collection apparatus, thereby controlling movement of the mobile device.

The localization information acquisition 405 indicates obtaining a result of localizing a STA by an AP, and may be performed for loop closure detection 103, to increase efficiency of building a three-dimensional map. In addition, the obtained localization information may further be used as input information of odometry 102 together with sensor data and the global point cloud map that are collected, to increase accuracy of estimating the real-time pose information of the local collection apparatus.

Based on a specific actual scenario requirement or a limitation on a compute capability, for example, a host computer 205 cannot implement a processing requirement on a calculation amount in an aspect such as the odometry 102 or nonlinear optimization 104 based on the global point cloud map, the obtained global point cloud map may be directly used for map building 105. In this way, the global point cloud map and a local three-dimensional map are fused, or may fill blind spots of each other, to obtain a complete global three-dimensional map. A specific manner of fusing the obtained global point cloud map and conventional SLAM is not limited in this application.

Based on the content described in the foregoing method embodiment, in this application, the three-dimensional map is jointly built based on the global point cloud map collected at a depression angle, and a more accurate transformation relationship may be obtained through optical communication between an AP and a STA, so that support for building the three-dimensional map is provided, and a probability of an incomplete built three-dimensional map caused by a collection blind spot of the local collection apparatus can be reduced. In addition, a movement path of the mobile device may be further planned based on the global point cloud map, so that blind movement of the mobile device in a target scenario can be avoided, thereby increasing efficiency of building a three-dimensional map.

Based on a same technical idea as the foregoing method for building a three-dimensional map, an embodiment of this application further provides an apparatus 500 for building a three-dimensional map. As shown in FIG. 5, the apparatus may be disposed on a host computer 205, or may be disposed on a cloud server 206. The apparatus 500 for building a three-dimensional map includes: a transceiver unit 501 and a processing unit 502. The apparatus 500 may be configured to implement the method described in the foregoing method embodiment. Optionally, the transceiver unit 501 and the processing unit 502 may be connected to each other by using a communication line 503. The communication line 503 may be a peripheral component interconnect (peripheral component interconnect, PCI for short) bus, an extended industry standard architecture (extended industry standard architecture, EISA for short) bus, or the like. The communication line 503 may be classified into an address bus, a data bus, a control bus, or the like. For ease of representation, only one bold line is used for representation in FIG. 5, but this does not mean that there is only one bus or only one type of bus.

The transceiver unit 501 is configured to obtain a current global point cloud map. The transceiver unit 501 is further configured to obtain multiple pieces of image data collected, during movement of a mobile device, by a local collection apparatus disposed on the mobile device. The processing unit 502 is configured to determine real-time pose information of the local collection apparatus that is generated at a corresponding collection moment at which the local collection apparatus collects each of the pieces of image data. The processing unit 502 is further configured to build a three-dimensional map based on the current global point cloud map, the multiple pieces of image data, and the real-time pose information of the local collection apparatus.

The three-dimensional map is built in a designated coordinate system, and the designated coordinate system is any one of the following coordinate systems: a first coordinate system determined based on a pose of a global collection apparatus at an initial moment, a second coordinate system determined based on a pose of the local collection apparatus at the initial moment, a world coordinate system, and a third coordinate system determined based on a pose at any fixed spatial point. When the processing unit 502 is configured to build the three-dimensional map based on the current global point cloud map, the multiple pieces of image data, and the real-time pose information of the local collection apparatus, the processing unit 502 is specifically configured to: determine an original coordinate system in which the current global point cloud map is located, an original coordinate system in which the multiple pieces of image data is located, and an original coordinate system in which the real-time pose information of the local collection apparatus is located; for the original coordinate system different from the designated coordinate system, perform coordinate transformation on map data in the original coordinate system based on a transformation relationship to obtain map data in the designated coordinate system, where the transformation relationship is determined based on a pose relationship between an origin of coordinates of the original coordinate system and an origin of coordinates of the designated coordinate system, and the map data in the original coordinate system includes one or more of the following: the current global point cloud map, the multiple pieces of image data, and the real-time pose information of the local collection apparatus; and build the three-dimensional map based on the current global point cloud map, the multiple pieces of image data, and the real-time pose information of the local collection apparatus that are in the designated coordinate system, to obtain the three-dimensional map in the designated coordinate system.

For example, a relative pose between the global collection apparatus and an access point AP is fixed, a relative pose between the local collection apparatus and a station STA is fixed, and the AP communicates with the STA. If the original coordinate system different from the designated coordinate system is the first coordinate system, the designated coordinate system is the second coordinate system, and the transformation relationship is a first transformation relationship, the processing unit 502 is configured to determine the first transformation relationship in the following manner: determining a first transformation matrix based on the relative pose between the global collection apparatus and the AP, determining a second transformation matrix based on a result of localizing the STA by the AP, and determining a third transformation matrix based on the relative pose between the STA and the local collection apparatus; and obtaining the first transformation relationship based on a product of the first transformation matrix, the second transformation matrix, and the third transformation matrix.

In a possible implementation, when the processing unit 502 is configured to determine the real-time pose information of the local collection apparatus at the corresponding collection moment at which the local collection apparatus collects each of the pieces of image data, the processing unit 502 is specifically configured to: obtain a real-time result of localizing the STA by the AP at each corresponding collection moment at which each of the pieces of image data is collected; obtain real-time pose information of the STA in a fourth coordinate system at each collection moment based on an initial result of localizing the STA by the AP at the initial moment, initial pose information of the STA in the fourth coordinate system at the initial moment, and the real-time localization result, where an origin of coordinates of the fourth coordinate system is determined based on a pose of the STA at the initial moment; determine real-time pose information of the local collection apparatus in the fourth coordinate system based on the real-time pose information of the STA in the fourth coordinate system and the third transformation matrix; and perform coordinate transformation on the real-time pose information of the local collection apparatus in the fourth coordinate system, to obtain the real-time pose information of the local collection apparatus in the designated coordinate system.

In addition, the processing unit 502 is further configured to detect, based on the real-time result of localizing the STA by the AP, a loop closure error existing during movement of the mobile device.

In a possible design, the processing unit 502 is further configured to: plan a movement path for the mobile device based on the current global point cloud map before obtaining the multiple pieces of image data collected by the local collection apparatus during movement of the mobile device; and generate a movement instruction based on the real-time pose information of the local collection apparatus and the movement path. The transceiver unit 501 is further configured to send the movement instruction to a controller of the mobile device, so that the controller controls the mobile device to move according to the movement instruction.

It can be noted that division into modules in embodiments of this application is schematic, and is merely logical function division. During actual implementation, there may be another division manner. In addition, functional units in each embodiment of this application may be integrated in one processing unit, or may exist separately and physically, or two or more units may be integrated in one unit. The integrated unit may be implemented in a form of hardware, or may be implemented in a form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or a part of the technical solutions may be implemented in the form of a software product. The computer software product is stored in a storage medium and includes several instructions for instructing a computer device (which may be a personal computer, a server, or a network device) or a processor to perform all or a part of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

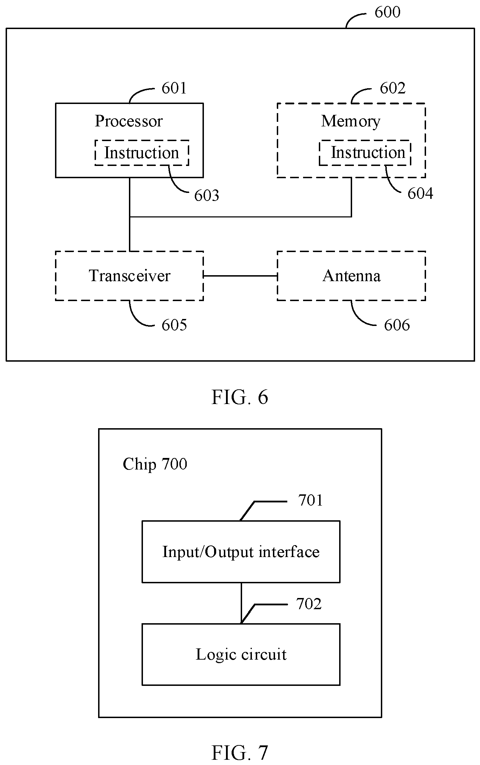

Based on a same idea as the foregoing method for building a three-dimensional map, as shown in FIG. 6, an embodiment of this application further provides a schematic diagram of a structure of an apparatus 600 for building a three-dimensional map. The apparatus 600 may be configured to implement the method described in the foregoing method embodiment. For details, refer to the descriptions in the foregoing method embodiment. The apparatus 600 may include one or more processors 601. The processor 601 may be a general-purpose processor, a dedicated processor, or the like. For example, the processor 601 may be a baseband processor or a central processing unit. The baseband processor may be configured to process a communication protocol and communication data. The central processing unit may be configured to: control a communication apparatus (for example, a base station, a terminal, or a chip), execute a software program, and process data of the software program. The apparatus for building a three-dimensional map may include a transceiver unit, configured to input (receive) and output (send) signals. For example, the transceiver unit may be a transceiver, a radio frequency chip, or the like.

The apparatus 600 includes one or more processors 601, and the one or more processors 601 can implement the method described in the foregoing embodiment.

Optionally, the processor 601 may implement another function in addition to the method described in the foregoing embodiment.

Optionally, in a design, the processor 601 may execute instructions, so that the apparatus 600 performs the method described in the foregoing method embodiment. All or some of the instructions may be stored in the processor, for example, an instruction 603, or may be stored in a memory 602 coupled to the processor, for example, an instruction 604, or the apparatus 600 performs the method described in the foregoing method embodiment according to both the instruction 603 and the instruction 604.

In another possible design, the apparatus 600 may include one or more memories 602 in which the instruction 604 is stored. The instruction may be run on the processor, so that the apparatus 600 performs the method described in the foregoing method embodiment. Optionally, the memory may further store data. Optionally, the processor may also store instructions and/or data. For example, the one or more memories 602 may store a correspondence described in the foregoing embodiment, or a parameter, a table, or the like related to the foregoing embodiment. The processor and the memory may be separately disposed, or may be integrated together.

In still another possible design, the apparatus 600 may further include a transceiver 605 and an antenna 606. The processor 601 may be referred to as a processing unit, and controls the apparatus (a terminal or a base station). The transceiver 605 may be referred to as a transceiver machine, a transceiver circuit, a transceiver unit, or the like, and is configured to implement a transceiver function of the apparatus through the antenna 606.

It can be noted that, the processor in this embodiment of this application may be an integrated circuit chip, and has a signal processing capability. In an implementation process, steps in the foregoing method embodiments are implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a non-volatile memory, or may include a volatile memory and a non-volatile memory. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (RAM), and serves as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It can be noted that the memory in the systems and methods described in this specification includes but is not limited to these and any memory of another appropriate type.

An embodiment of this application further provides a computer storage medium in which a computer program is stored. When the computer program is executed by a computer, the method for building a three-dimensional map in any one of the method embodiments described above is implemented.

An embodiment of this application further provides a computer program product. When the computer program product is executed by a computer, the method for building a three-dimensional map in any one of the method embodiments described above is implemented

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a highdensity digital video disc (digital video disc, DVD)), a semiconductor medium (for example, a solid state disk (solid state disk, SSD)), or the like.

An embodiment of this application further provides a processing apparatus, including a processor and an interface. The processor is configured to perform the method for building a three-dimensional map in any one of the method embodiments described above.

It can be understood that the processing apparatus may be a chip. The processor may be implemented by hardware, or may be implemented by software. When the processor is implemented by the hardware, the processor may be a logic circuit, an integrated circuit, or the like. When the processor is implemented by the software, the processor may be a general-purpose processor. The general-purpose processor is implemented by reading software code stored in a memory. The memory may be integrated into the processor, or may be located outside the processor and exist independently.

As shown in FIG. 7, an embodiment of this application further provides a chip 700, including an input/output interface 701 and a logic circuit 702. The input/output interface 701 is configured to receive/output a code instruction or information. The logic circuit 702 is configured to: execute the code instruction or perform, based on the information, the method for building a three-dimensional map in any one of the method embodiments described above.

The chip 700 may implement functions of the processing unit and/or the transceiver unit described in the foregoing embodiment.

For example, the input/output interface 701 is configured to obtain a current global point cloud map.

For another example, the input/output interface 701 is configured to obtain multiple pieces of image data collected, during movement of a mobile device, by a local collection apparatus disposed on the mobile device.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for convenience and brevity of description, for a specific working process of the foregoing system, apparatus, and unit, refer to a corresponding process in the method embodiment. Details are not described herein again.

In the several embodiments provided in this application, it can be understood that the disclosed apparatuses and methods may be implemented in other manners. For example, the foregoing apparatus embodiments are merely examples. For example, division into the units is merely logical function division. During actual implementation, there may be another division manner. For example, multiple units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on multiple network units. Some or all of the units may be selected based on actual requirements to achieve the objectives of the solutions of embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software function unit.

With descriptions of the foregoing implementations, a person skilled in the art may clearly understand that this application may be implemented by hardware, firmware, or a combination thereof. When this application is implemented by software, the foregoing functions may be stored in a computer-readable medium or transmitted as one or more instructions or code in a computer-readable medium. The computer-readable medium includes a computer storage medium and a communication medium. The communication medium includes any medium that facilitates transmission of a computer program from one place to another. The storage medium may be any available medium accessible to a computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can be used to carry or store expected program code in a form of instructions or a data structure and can be accessed by the computer. In addition, any connection may properly serve as a computer storage medium. For example, if software is transmitted from a website, a server, or another remote source by using a coaxial cable, an optical fiber/cable, a twisted pair, a DSL, or wireless technologies such as infrared ray, radio, and microwave, the coaxial cable, optical fiber/cable, twisted pair, DSL, or wireless technologies such as infrared ray, radio, and microwave are included in fixation of a medium to which they belong. A disk (Disk) and a disc (disc) used in this application include a compact disc (CD), a laser disc, an optical disc, a digital versatile disc (DVD), a floppy disk, and a Blu-ray disc, where the disk generally copies data in a magnetic manner, and the disc copies data optically in a laser manner. The foregoing combination shall also be included in the protection scope of the computer-readable medium.

## Claims

1. A method for building a three-dimensional map, comprising:

   obtaining, by an apparatus for building a three-dimensional map, a current global point cloud map;
   obtaining, by the apparatus for building a three-dimensional map, multiple pieces of image data collected, during movement of a mobile device, by a local collection apparatus disposed on the mobile device;
   determining, by the apparatus for building a three-dimensional map, real-time pose information of the local collection apparatus that is generated at a corresponding collection moment at which the local collection apparatus collects each of the pieces of image data; and

building, by the apparatus for building a three-dimensional map, a three-dimensional map based on the current global point cloud map, the multiple pieces of image data, and the real-time pose information of the local collection apparatus.

2. The method according to claim 1, wherein the three-dimensional map is built in a designated coordinate system, and the designated coordinate system is any one of the following coordinate systems: a first coordinate system determined based on a pose of the global collection apparatus at an initial moment, a second coordinate system determined based on a pose of the local collection apparatus at the initial moment, a world coordinate system, and a third coordinate system determined based on a pose at any fixed spatial point; and

the building, by the apparatus for building a three-dimensional map, a three-dimensional map based on the current global point cloud map, the multiple pieces of image data, and the real-time pose information of the local collection apparatus comprises:

determining an original coordinate system in which the current global point cloud map is located, an original coordinate system in which the multiple pieces of image data is located, and an original coordinate system in which the real-time pose information of the local collection apparatus is located;

for the original coordinate system different from the designated coordinate system, performing coordinate transformation on map data in the original coordinate system based on a transformation relationship to obtain map data in the designated coordinate system, wherein the transformation relationship is determined based on a pose relationship between an origin of coordinates of the original coordinate system and an origin of coordinates of the designated coordinate system, and the map data in the original coordinate system comprises one or more of the following: the current global point cloud map, the multiple pieces of image data, and the real-time pose information of the local collection apparatus; and

building the three-dimensional map based on the current global point cloud map, the multiple pieces of image data, and the real-time pose information of the local collection apparatus that are in the designated coordinate system, to obtain the three-dimensional map in the designated coordinate system.

3. The method according to claim 2, wherein a relative pose between the global collection apparatus and an access point AP is fixed, a relative pose between the local collection apparatus and a station STA is fixed, and the AP communicates with the STA; and

if the original coordinate system different from the designated coordinate system is the first coordinate system, the designated coordinate system is the second coordinate system, and the transformation relationship is a first transformation relationship, the apparatus for building a three-dimensional map determines the first transformation relationship in the following manner:

determining a first transformation matrix based on the relative pose between the global collection apparatus and the AP, determining a second transformation matrix based on a result of localizing the STA by the AP, and determining a third transformation matrix based on the relative pose between the STA and the local collection apparatus; and

obtaining the first transformation relationship based on a product of the first transformation matrix, the second transformation matrix, and the third transformation matrix.

4. The method according to claim 3, wherein the determining, by the apparatus for building a three-dimensional map, real-time pose information of the local collection apparatus that is generated at a corresponding collection moment at which the local collection apparatus collects each of the pieces of image data comprises:

obtaining a real-time result of localizing the STA by the AP at each corresponding collection moment at which each of the pieces of image data is collected;

obtaining real-time pose information of the STA in a fourth coordinate system at each collection moment based on an initial result of localizing the STA by the AP at the initial moment, initial pose information of the STA in the fourth coordinate system at the initial moment, and the real-time localization result, wherein an origin of coordinates of the fourth coordinate system is determined based on a pose of the STA at the initial moment;

determining real-time pose information of the local collection apparatus in the fourth coordinate system based on the real-time pose information of the STA in the fourth coordinate system and the third transformation matrix; and

performing coordinate transformation on the real-time pose information of the local collection apparatus in the fourth coordinate system, to obtain the real-time pose information of the local collection apparatus in the designated coordinate system.

**5.** The method according to claim 3 or 4, wherein the method further comprises:
detecting, by the apparatus for building a three-dimensional map based on the real-time result of localizing the STA by the AP, a loop closure error existing during movement of the mobile device.

**6.** The method according to any one of claims 1 to 5, wherein before the obtaining, by the apparatus for building a three-dimensional map, multiple pieces of image data collected by a local collection apparatus during movement of the mobile device, the method further comprises:

planning, by the apparatus for building a three-dimensional map, a movement path for the mobile device based on the current global point cloud map;
generating, by the apparatus for building a three-dimensional map, a movement instruction based on the real-time pose information of the local collection apparatus and the movement path; and
sending, by the apparatus for building a three-dimensional map, the movement instruction to a controller of the mobile device, so that the controller controls the mobile device to move according to the movement instruction.

**7.** An apparatus for building a three-dimensional map, comprising a transceiver unit and a processing unit, wherein

the transceiver unit is configured to obtain a current global point cloud map;
the transceiver unit is further configured to obtain multiple pieces of image data collected, during movement of a mobile device, by a local collection apparatus disposed on the mobile device;
the processing unit is configured to determine real-time pose information of the local collection apparatus that is generated at a corresponding collection moment at which the local collection apparatus collects each of the pieces of image data; and
the processing unit is further configured to build a three-dimensional map based on the current global point cloud map, the multiple pieces of image data, and the real-time pose information of the local collection apparatus.

**8.** The apparatus according to claim 7, wherein the three-dimensional map is built in a designated coordinate system, and the designated coordinate system is any one of the following coordinate systems: a first coordinate system determined based on a pose of the global collection apparatus at an initial moment, a second coordinate system determined based on a pose of the local collection apparatus at the initial moment, a world coordinate system, and a third coordinate system determined based on a pose at any fixed spatial point; and
when the processing unit is configured to build the three-dimensional map based on the current global point cloud map, the multiple pieces of image data, and the real-time pose information of the local collection apparatus, the processing unit is specifically configured to:

determine an original coordinate system in which the current global point cloud map is located, an original coordinate system in which the multiple pieces of image data is located, and an original coordinate system in which the real-time pose information of the local collection apparatus is located;
for the original coordinate system different from the designated coordinate system, perform coordinate transformation on map data in the original coordinate system based on a transformation relationship to obtain map data in the designated coordinate system, wherein the transformation relationship is determined based on a pose relationship between an origin of coordinates of the original coordinate system and an origin of coordinates of the designated coordinate system, and the map data in the original coordinate system comprises one or more of the following: the current global point cloud map, the multiple pieces of image data, and the real-time pose information of the local collection apparatus; and
build the three-dimensional map based on the current global point cloud map, the multiple pieces of image data, and the real-time pose information of the local collection apparatus that are in the designated coordinate system, to obtain the three-dimensional map in the designated coordinate system.

**9.** The apparatus according to claim 8, wherein a relative pose between the global collection apparatus and an access point AP is fixed, a relative pose between the local collection apparatus and a station STA is fixed, and the AP communicates with the STA; and
if the original coordinate system different from the designated coordinate system is the first coordinate system, the designated coordinate system is the second coordinate system, and the transformation relationship is a first transformation relationship, the processing unit is configured to determine the first transformation relationship in the following manner:

determining a first transformation matrix based on the relative pose between the global collection apparatus and the AP, determining a second transformation matrix based on a result of localizing the STA by the AP, and determining a third transformation matrix based on the relative pose between the STA and the local collection apparatus; and

obtaining the first transformation relationship based on a product of the first transformation matrix, the second transformation matrix, and the third transformation matrix.

10. The apparatus according to claim 9, wherein when the processing unit is configured to determine real-time pose information of the local collection apparatus that is generated at a corresponding collection moment at which the local collection apparatus collects each of the pieces of image data is specifically configured to:

obtain a real-time result of localizing the STA by the AP at each corresponding collection moment at which each of the pieces of image data is collected;
obtain real-time pose information of the STA in a fourth coordinate system at each collection moment based on an initial result of localizing the STA by the AP at the initial moment, initial pose information of the STA in the fourth coordinate system at the initial moment, and the real-time localization result, wherein an origin of coordinates of the fourth coordinate system is determined based on a pose of the STA at the initial moment;
determine real-time pose information of the local collection apparatus in the fourth coordinate system based on the real-time pose information of the STA in the fourth coordinate system and the third transformation matrix; and
perform coordinate transformation on the real-time pose information of the local collection apparatus in the fourth coordinate system, to obtain the real-time pose information of the local collection apparatus in the designated coordinate system.

11. The apparatus according to claim 9 or 10, wherein the processing unit is further configured to detect, based on the real-time result of localizing the STA by the AP, a loop closure error existing during movement of the mobile device.

12. The apparatus according to any one of claims 7 to 11, wherein the processing unit is further configured to: before the multiple pieces of image data collected, during movement of a mobile device, by a local collection apparatus disposed on the mobile device are obtained, plan a movement path for the mobile device based on the current global point cloud map; and

generate a movement instruction based on the real-time pose information of the local collection apparatus and the movement path; and
the transceiver unit is further configured to send the movement instruction to a controller of the mobile device, so that the controller controls the mobile device to move according to the movement instruction.

13. A computing device, wherein the computing device comprises a memory and one or more processors, wherein the memory stores computer program code, and the computer program code comprises computer instructions; and when the computer instructions are executed by the processor, the method according to any one of claims 1 to 6 is performed.

14. A computer device cluster, wherein the computer device cluster comprises at least one computing device according to claim 13.

15. A computer storage medium, wherein the computer storage medium stores a computer program, and when the computer program is executed by a computer, the method according to any one of claims 1 to 6 is performed.

| Sensor data collection 101 | → | Odometry 102 | → | Nonlinear optimization 104 | → | Map building 105 |

| Loop closure detection 103 |

FIG. 1

FIG. 2

Global collection apparatus

Apparatus for building a three-dimensional map

Local collection apparatus

S301.
Obtain a current global point cloud map

S302. Obtain multiple pieces of image data collected, during movement of a mobile device, by the local collection apparatus disposed on the mobile device

S303. Determine real-time pose information of the local collection apparatus that is generated at a corresponding collection moment at which the local collection apparatus collects each of the pieces of image data

S304. Build a three-dimensional map based on the current global point cloud map, the multiple pieces of image data, and the real-time pose information of the local collection apparatus

FIG. 3

```
┌─────────────────┐         ┌─────────────────┐
│  Movement path  │◄────────│   Global point  │
│  planning 403   │         │    cloud map    │
│                 │         │ acquisition 401 │
└─────────────────┘         └─────────────────┘
         │                           │
         ▼                           ▼
┌─────────────────┐         ┌─────────────────┐
│    Movement     │    ┌───►│   Coordinate    │
│   instruction   │    │    │ transformation  │
│  generation 404 │    │    │       402       │
└─────────────────┘    │    └─────────────────┘
         │             │             │
         ▼             │             ▼
┌ ─ ─ ─ ─ ─ ─ ─ ─ ┐    │   ┌ ─ ─ ─ ─ ┼ ─ ─ ─ ─ ─ ─ ─ ─ ─ ─ ─ ─ ─ ─ ─ ─ ─ ─ ─ ─ ┐
  Sensor data      │    │   │         ▼
│ collection 101   ─────┼──►│  ┌────────────┐   ┌──────────────┐   ┌────────────┐ │
  ─ ─ ─ ─ ─ ─ ─ ─ ┘    │   │  │ Odometry102│──►│  Nonlinear   │──►│Map building│
                       │   │  │            │   │optimization  │   │    105     │ │
┌─────────────────┐    │   │  └────────────┘   │    104       │   └────────────┘
│  Localization   │    │   │                   └──────────────┘                  │
│   information   │────┘   │                          ▲
│ acquisition 405 │        │  ┌────────────┐          │                          │
└─────────────────┘        │  │Loop closure│──────────┘
                           │  │detection103│                                     │
                           │  └────────────┘
                           └ ─ ─ ─ ─ ─ ─ ─ ─ ─ ─ ─ ─ ─ ─ ─ ─ ─ ─ ─ ─ ─ ─ ─ ─ ─ ┘
```

FIG. 4

Apparatus 500 for building
a three-dimensional map

```
┌───────────────────────────────────────────────────────────┐
│                                                            │
│                             501                            │
│                                                            │
│       ┌─────────────────────┐                              │
│       │  Transceiver unit   │                              │
│       └─────────────────────┘                        503   │
│                  ▲                                         │
│                  ▼                          502            │
│       ───────────────────────────────────────────────     │
│                              ▲                             │
│                              ▼                             │
│                    ┌─────────────────────┐                │
│                    │  Processing unit    │                │
│                    └─────────────────────┘                │
│                                                            │
└───────────────────────────────────────────────────────────┘
```

FIG. 5

600

601

Processor

Instruction

603

602

Memory

Instruction

604

Transceiver

605

Antenna

606

FIG. 6

Chip 700

701

Input/Output interface

702

Logic circuit

FIG. 7

## INTERNATIONAL SEARCH REPORT

| International application No. |
| --- |
| **PCT/CN2021/124676** |

| A. CLASSIFICATION OF SUBJECT MATTER |
| --- |
| G06T 17/05(2011.01)i |
| According to International Patent Classification (IPC) or to both national classification and IPC |

| B. FIELDS SEARCHED |
| --- |
| Minimum documentation searched (classification system followed by classification symbols) |
| G06T |
| Documentation searched other than minimum documentation to the extent that such documents are included in the fields searched |
| Electronic data base consulted during the international search (name of data base and, where practicable, search terms used) |
| CNPAT, IEEE, CNKI, WPI, EPODOC: 三维, 地图, 构建, 创建, 生成, 全局, 局部, 点云, 图像, 位姿, 融合, 3D, map, generate, create, global, local, point, cloud, gesture, match |

| C. DOCUMENTS CONSIDERED TO BE RELEVANT |
| --- |

| Category* | Citation of document, with indication, where appropriate, of the relevant passages | Relevant to claim No. |
| --- | --- | --- |
| A | CN 112105890 A (BAIDU.COM TIMES TECHNOLOGY (BEIJING) CO., LTD. et al.) 18 December 2020 (2020-12-18) <br> claims 1-2, description paragraphs 0129-0138, figures 1-18 | 1-15 |
| A | CN 110084853 A (BEIJING YIDA TULING TECHNOLOGY CO., LTD.) 02 August 2019 (2019-08-02) <br> entire document | 1-15 |
| A | CN 108320329 A (VKINGTELE INTELLIGENT TECHNOLOGY CO., LTD. et al.) 24 July 2018 (2018-07-24) <br> entire document | 1-15 |
| A | CN 109087393 A (SHANTOU UNIVERSITY) 25 December 2018 (2018-12-25) <br> entire document | 1-15 |
| A | CN 108226938 A (SOUTH CHINA UNIVERSITY OF TECHNOLOGY) 29 June 2018 (2018-06-29) <br> entire document | 1-15 |
| A | CN 110047142 A (SHENZHEN INSTITUTES OF ADVANCED TECHNOLOGY, CHINESE ACADEMY OF SCIENCES) 23 July 2019 (2019-07-23) <br> entire document | 1-15 |

☑ Further documents are listed in the continuation of Box C.　　☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **07 January 2022** | **19 January 2022** |

| Name and mailing address of the ISA/CN | Authorized officer |
| --- | --- |
| China National Intellectual Property Administration (ISA/CN) <br> No. 6, Xitucheng Road, Jimenqiao, Haidian District, Beijing 100088, China | |
| Facsimile No. **(86-10)62019451** | Telephone No. |

Form PCT/ISA/210 (second sheet) (January 2015)

## INTERNATIONAL SEARCH REPORT

International application No.

**PCT/CN2021/124676**

**C.    DOCUMENTS CONSIDERED TO BE RELEVANT**

| Category* | Citation of document, with indication, where appropriate, of the relevant passages | Relevant to claim No. |
|---|---|---|
| A | KR 20190064311 A (MOBILTECH) 10 June 2019 (2019-06-10) entire document | 1-15 |

Form PCT/ISA/210 (second sheet) (January 2015)

## INTERNATIONAL SEARCH REPORT
### Information on patent family members

International application No.

**PCT/CN2021/124676**

| Patent document cited in search report | | | Publication date (day/month/year) | Patent family member(s) | | | Publication date (day/month/year) |
|---|---|---|---|---|---|---|---|
| CN | 112105890 | A | 18 December 2020 | WO | 2020154966 | A1 | 06 August 2020 |
| | | | | KR | 20200096725 | A | 13 August 2020 |
| | | | | EP | 3707467 | A1 | 16 September 2020 |
| | | | | JP | 2021515254 | W | 17 June 2021 |
| | | | | US | 2021334988 | A1 | 28 October 2021 |
| CN | 110084853 | A | 02 August 2019 | None | | | |
| CN | 108320329 | A | 24 July 2018 | None | | | |
| CN | 109087393 | A | 25 December 2018 | None | | | |
| CN | 108226938 | A | 29 June 2018 | None | | | |
| CN | 110047142 | A | 23 July 2019 | WO | 2020186678 | A1 | 24 September 2020 |
| KR | 20190064311 | A | 10 June 2019 | None | | | |

Form PCT/ISA/210 (patent family annex) (January 2015)

**EP 4 283 567 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110136015